# EUROPÄISCHE PATENTSCHRIFT

(11) **EP 0 553 672 B1**
(45) Veröffentlichungstag und Bekanntmachung des Hinweises auf die Patenterteilung: **17.04.1996**
(21) Anmeldenummer: 93100648.0
(22) Anmeldetag: 18.01.1993
(51) Int. Cl.: C09B 67/22, C09B 67/26, C09D 11/02

(54) **Farbstoffmischungen enthaltend zwei verschiedene Monoazofarbstoffe**
Dyestuff mixtures containing two different mono-azo dyes
Mélanges de colorants contenant deux colorants monoazoiques différents

(30) Priorität: 30.01.1992 DE 4202527
(43) Veröffentlichungstag der Anmeldung: 04.08.1993
(73) Patentinhaber: BAYER AG, D-51368 Leverkusen (DE)
(72) Erfinder: Hinrichs, Rolf, Dr., W-5090 Leverkusen 1 (DE); Wild, Peter, Dr., W-5068 Odenthal (DE)

(56) Entgegenhaltungen:
- EP-A- 0 201 690
- EP-A- 0 369 940
- EP-A- 0 479 056
- FR-A- 2 135 265

## Beschreibung

Die vorliegende Erfindung betrifft Farbstoffmischungen enthaltend den Farbstoff der Formel (I) 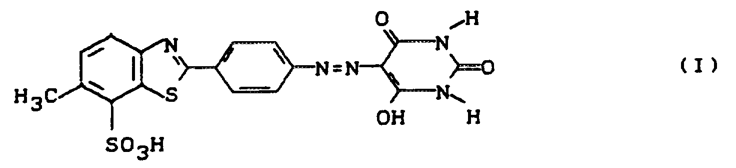 und einen Farbstoff der Formel 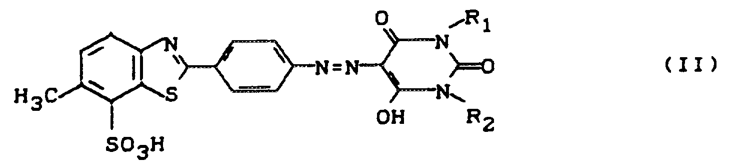 worin
- R₁ und R₂: unabhängig voneinander für Alkyl, Cycloalkyl oder Aryl stehen,
und/oder tautomere Formen der Farbstoffe der Formeln (I) und/oder (II).

Bevorzugt sind Farbstoffmischungen enthaltend den Farbstoff der Formel (I) und einen Farbstoff der Formel (II), worin
- R₁ und R₂: unabhängig voneinander für C₁-C₆-Alkyl, C₃-C₆-Cycloalkyl oder C₆-C₁₀-Aryl stehen,
und/oder deren tautomere Formen.

Besonders bevorzugt sind Farbstoffmischungen enthaltend den Farbstoff (I) und einen Farbstoff der Formel (II), worin
- R₁ und R₂: unabhängig voneinander für C₁-C₄-Alkyl stehen,
und/oder deren tautomere Formen.

Ganz besonders bevorzugt sind Farbstoffmischungen enthaltend 5 bis 25 Gew.-Tle Farbstoff der Formel (I) und 0,2 bis 5 Gew.-Tle Farbstoff der Formel 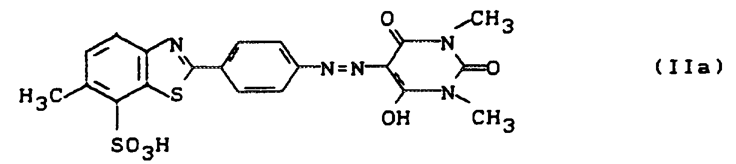 und/oder deren tautomere Formen.

Die angegebenen Formeln (I), (II) und (IIa) stellen jeweils nur eine der möglichen tautomeren Formen dar. Die Erfindung umfaßt jedoch jeweils alle tautomeren Formen.

Beispiele für Alkyl in der Definition von R¹ und R sind Methyl-, Ethyl-, n- und iso-Propyl-, n-, iso-, tert.-Butyl-, geradkettige und verzweigte Pentyl- und Hexylreste.

Beispiele für Cycloalkyl in der Definition von R¹ und R sind Cyclopropyl, Cyclopentyl und Cyclohexyl.

Beispiele für Aryl in der Definition von R₁ und R₂ sind Phenyl und Naphthyl.

Die Farbstoffe der Formeln (I) und (II) und deren tautomeren Formen sind bekannt (vergleiche z.B. DE-A 2 221 666 und EP-A 0 369 940) und können auf bekannte Art und Weise z.B. durch Kupplung des Diazotierungsproduktes aus 2-(p-Aminophenyl)-6-methyl-7-benzothiazolsulfonsäure auf Barbitursäure oder ein entsprechendes Barbitursäurederivat hergestellt werden.

Die erfindungsgemäßen Farbstoffmischungen der Farbstoffe (I) und (II) und/oder deren tautomere Formen eignen sich insbesondere zur Herstellung konzentrierter, lagerstabiler Lösungen dieser Farbstoffe.

Ein weiterer Gegenstand der vorliegenden Erfindung sind konzentrierte wäßrige Farbstofflösungen enthaltend eine Mischung der Farbstoffe der Formeln (I) und (II) und/oder deren tautomere Formen.

Die erfindungsgemäßen Farbstofflösungen enthalten vorzugsweise bis zu 2 bis 30 Gew.-Tle einer Mischung aus den Farbstoffen (I) und (II) und/oder deren tautomeren Formen und 98 bis 50 Gew.-Tle Wasser.

Bevorzugt sind konzentrierte Farbstofflösungen enthaltend Mischungen des Farbstoffs der Formel (I) mit einem Farbstoff der Formel (II), worin
- R₁ und R₂: unabhängig voneinander für C₁-C₆-Alkyl, C₃-C₆-Cyclohexyl oder C₆-C₁₀-Aryl stehen,
und/oder deren tautomere Formen.

Besonders bevorzugt sind Farbstofflösungen enthaltend Mischungen des Farbstoffs der Formel (I) mit einem Farbstoff der Formel (II), worin
- R₁ und R₂: unabhängig voneinander für C₁-C₄-Alkyl stehen,
und/oder deren tautomere Formen.

Ganz besonders bevorzugt sind Farbstofflösungen enthaltend Mischungen des Farbstoffs der Formel (I) mit dem Farbstoff der Formel (IIa) 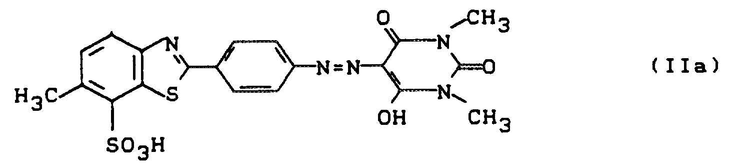 und/oder deren tautomere Formen.

Vorzugsweise enthalten die erfindungsgemäßen Farbstofflösungen 5 bis 25 Gew.-Tle Farbstoff der Formel (I) und/oder dessen tautomere Formen und 0,2 bis 5 Gew.-Tle Farbstoff der Formel (II) und/oder dessen tautomere Formen und 94,8 bis 70 Gew.-Tle Wasser.

Die erfindungsgemäßen Farbstofflösungen können übliche Zusätze wie beispielsweise Harnstoff, Formamid, ε-Caprolactam, Dimethylformamid, mehrwertige Alkohole wie z.B. Ethylenglykol, Propylenglykol oder Glycerin enthalten. Diese Zusätze werden in den für die genannten Stoffe üblichen Mengen zugesetzt.

Vorzugsweise enthalten die erfindungsgemäßen Farbstofflösungen 1 bis 10 Gew.-Tle Triethanolamin sowie 0 bis 1 Gew.-Tle Diethanolamin und 0 bis 1 Gew.-Tle Lithiumhydroxid. Außer Triethanolamin und gegebenenfalls Diethanolamin und Lithiumhydroxid enthalten die erfindungsgemäßen Farbstofflösungen vorzugsweise keine weiteren Zusätze.

Besonders bevorzugte erfindungsgemäße Farbstofflösungen enthalten
- 5 - 25 Gew.-Tle: Farbstoff der Formel (I) und/oder dessen tautomere Formen,
- 0,2 - 5 Gew.-Tle: Farbstoff der Formel (II) und/oder dessen tautomere Formen,
- 1 - 10 Gew.-Tle: Triethanolamin,
- 0 - 1 Gew.-Tle: Diethanolamin,
- 0 - 1 Gew.-Tle: Lithiumhydroxid und
- 93,8- 58 Gew.-Tle: Wasser.

Eine ganz besonders bevorzugte erfindungsgemäße Farbstofflösung enthält
- 7 - 25 Gew.-Tle: Farbstoff der Formel (I) und/oder dessen tautomere Formen,
- 0,2 - 2 Gew.-Tle: Farbstoff der Formel (IIa) und/oder dessen tautomere Formen,
- 1 - 5 Gew.-Tle: Triethanolamin,
- 0,1 -0,5 Gew.-Tle: Diethanolamin,
- 0,1 -0,5 Gew.-Tle: Lithiumhydroxid und
- 91,6- 67 Gew.-Tle: Wasser

Konzentrierte Lösungen eines Farbstoffs der Formel (I) oder (II) sind z.B. aus EP 0 369 940 bekannt.

Diese Farbstofflösungen enthalten jedoch zur Stabilisierung große Mengen an organischen Lösungsvermittlern, trotzdem erfüllt ihre Lagerstabilität nicht alle an sie gestellten Anforderungen.

Die erfindungsgemäßen Farbstofflösungen enthalten vorzugsweise nur eine geringe Menge von maximal 12 Gew.-Tle an organischen Lösungsvermittlern Triethanolamin, Diethanolamin und LiOH und sind im übrigen vorzugsweise frei von weiteren wasserlöslichen organischen Lösungsvermittlern wie z.B. Harnstoff, Formamid, ε-Caprolactam, Dimethylformamid oder mehrwertigen Alkoholen wie z.B. Ethylenglykol, Propylenglykol und Glycerin.

Darüberhinaus zeichnen sich die erfindungsgemäßen Farbstofflösungen durch eine verbesserte Lagerstabilität gegenüber dem Stand der Technik aus.

Die erfindungsgemäßen Farbstoffmischungen können hergestellt werden, indem man pro Mol an diazotierter 2-(p-Aminophenyl)-6-methyl-7-benzothiazolsulfonsäure eine Mischung von vorzugsweise 0,60 bis 0,98 Mol Barbitursäure und 0,02 bis 0,40 Mol Barbitursäurederivat der Formel (III) 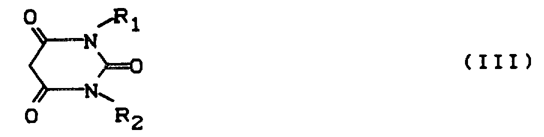 worin R₁ und R₂ die breiteste bei Formel (II) angegebene Bedeutung haben, einsetzt.

Die Kupplung wird vorzugsweise in Wasser und vorzugsweise in Gegenwart von Triethanolamin und gegebenenfalls in Gegenwart von Diethanolamin und Lithiumhydroxid bei einer Temperatur im Bereich von 20 bis 40°C durchgeführt

Die Herstellung der erfindungsgemäßen konzentrierten wäßrigen Farbstofflösungen erfolgt im allgemeinen in der Weise, daß das Betain der diazotierten 2-(p-Aminophenyl)-6-methyl-7-benzothiazolsulfonsäure mit demineralisiertem Wasser salzarm gewaschen wird und anschließend in demineralisiertem Wasser mit einer Mischung -bestehend aus Barbitursäure und einer Kupplungskomponente der Formel (III) - direkt zur Lösung mit Triethanolamin sowie gegebenenfalls Diethanolamin und Lithiumhydroxid gekuppelt wird und mit Wasser auf die gewünschte Farbstärke eingestellt wird.

Der pH-Wert der erfindungsgemäßen Farbstofflösungen liegt vorzugsweise in einem Bereich zwischen pH 6,5 und 8,5, insbesondere zwischen pH 7 und 7,5.

Die erhaltenen konzentrierten wäßrigen Farbstoffmischungen zeichnen sich vor allem durch eine gute Lagerstabilität bei Temperaturen von -8°C bis +40°C aus.

Verwendung finden die erfindungsgemäßen Farbstofflösungen insbesondere zum Färben und Bedrucken von Papier.

Die mit ihnen erhaltenen Papierfärbungen zeichnen sich durch gute Licht- und Naßechtheiten sowie durch Brillanz und Klarheit der Farbtöne aus.

### Beispiel 1

- 139,3 g: 2-(p-Aminophenyl)-6-methyl-7-benzothiazolsulfonsäure werden in
- 955 ml: Wasser suspendiert. Nach Zusatz von
- 69 ml: konzentrierter Salzsäure werden bei 30°C bis 40°C
- 101 ml: 30%ige Natriumnitritlösung zugetropft. Man rührt eine Stunde nach und zerstört überschüssiges Nitrit mit Amidosulfonsäure. Das Betain der Diazoniumverbindung wird abgesaugt und mit
- 270 ml: demineralisiertem Wasser gewaschen. Anschließend werden
- 560 ml: demineralisiertes Wasser vorgelegt, die Diazotierungspaste zugesetzt und verrührt. Diese Suspension wird unter Rühren mit einer Mischung aus
- 50,2 g: Barbitursäure und
- 3,2 g: 1,3-Dimethylbarbitursäure versetzt und der pH-Wert mit
- 2,3 g: Diethanolamin,
- 8,0 g: Lithiumhydroxid-Monohydrat und
- 35,2 g: Triethanolamin auf 7 gestellt. Nach Klären wird die Lösung mit
- 360 ml: Wasser verdünnt. Die Farbstofflösung enthält ca. 12,3 Gew.-Tle Farbstoff der Formel I und 0,6 Gew.-Tle Farbstoff der Formel IIa. Die Lösung zeigt nach dreimonatiger Lagerung bei -8°C beziehungsweise +40°C keinerlei Rückstand.

### Beispiel 2

- 139,3 g: 2-(p-Aminophenyl)-6-methyl-7-benzothiazolsulfonsäure werden wie in Beispiel 1 diazotiert, isoliert und wieder in Wasser verrührt. Diese Suspension wird unter Rühren mit einer Mischung aus
- 47,6 g: Barbitursäure und
- 6,4 g: 1,3-Dimethylbarbitursäure versetzt und der pH-Wert mit
- 2,3 g: Diethanolamin,
- 8,0 g: Lithiumhydroxid-Monohydrat und
- 35,2 g: Triethanolamin auf 7 gestellt. Nach Klären wird die Lösung mit
- 360 ml: Wasser verdünnt. Die Farbstofflösung enthält ca. 11,7 Gew.-Tle Farbstoff der Formel I und 1,3 Gew.-Tle Farbstoff der Formel IIa. Die Lösung zeigt nach dreimonatiger Lagerung bei -8°C beziehungsweise +40°C keinerlei Rückstand.

### Beispiel 3

- 139,3 g: 2-(p-Aminophenyl)-6-methyl-7-benzothiazolsulfonsäure werden wie in Beispiel 1 diazotiert, isoliert und wieder in Wasser verrührt. Diese Suspension wird unter Rühren mit einer Mischung aus
- 50,2 g: Barbitursäure und
- 3,8 g: 1,3,3-Dimethylbarbitursäure versetzt und der pH-Wert mit
- 2,3 g: Diethanolamin,
- 8,0 g: Lithiumhydroxid-Monohydrat und
- 35,2 g: Triethanolamin auf 7 gestellt. Nach Klären wird die Lösung mit
- 360 ml: Wasser verdünnt. Die Farbstofflösung enthält ca. 12,3 Gew.-Tle Farbstoff der Formel I und 0,7 Gew.-Tle Farbstoff der Formel II mit R₁ und R₂ = Ethyl. Die Lösung zeigt nach dreimonatiger Lagerung bei -8°C beziehungsweise +40°C keinerlei Rückstand.

### Beispiel 4

- 139,3 g: 2-(p-Aminophenyl)-6-methyl-7-benzothiazolsulfonsäure werden wie in Beispiel 1 diazotiert, isoliert und wieder in Wasser verrührt. Diese Suspension wird unter Rühren mit einer Mischung aus
- 50,2 g: Barbitursäure und
- 3,2 g: 1,3-Dimethylbarbitursäure versetzt und der pH mit
- 4,0 g: Diethanolamin,
- 4,0 g: Lithiumhydroxid-Monohydrat und
- 37,0 g: Triethanolamin auf 7 gestellt. Nach Klären wird die Lösung mit
- 360 ml: Wasser verdünnt. Die Farbstofflösung enthält ca. 12,3 Gew.-Tle Farbstoff der Formel I und 0,6 Gew.-Tle Farbstoff der Formel IIa. Die Lösung zeigt nach dreimonatiger Lagerung bei -8°C beziehungsweise +40°C keinerlei Rückstand.

### Beispiel 5

- 139,3 g: 2-(p-Aminophenyl)-6-methyl-7-benzothiazolsulfonsäure werden wie in Beispiel 1 diazotiert, isoliert und wieder in Wasser verrührt. Diese Suspension wird unter Rühren mit einer Mischung aus
- 47,6 g: Barbitursäure und
- 6,4 g: 1,3-Dimethylbarbitursäure versetzt und der pH mit
- 4,0 g: Diethanolamin,
- 8,0 g: Lithiumhydroxid-Monohydrat und
- 36,5 g: Triethanolamin auf 7,5 gestellt. Nach Klären wird die Lösung mit
- 360 ml: Wasser verdünnt. Die Farbstofflösung enthält ca. 11,7 Gew.-Tle Farbstoff der Formel I und 1,3 Gew.-Tle Farbstoff der Formel IIa. Die Lösung zeigt nach dreimonatiger Lagerung bei -8°C beziehungsweise +40°C keinerlei Rückstand.

## Patentansprüche

1. Farbstoffmischungen enthaltend den Farbstoff der Formel (I) 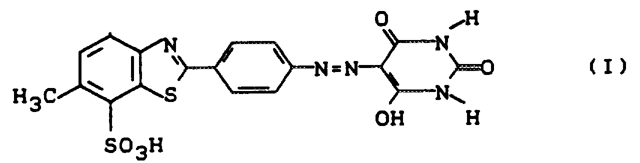 und einen Farbstoff der Formel 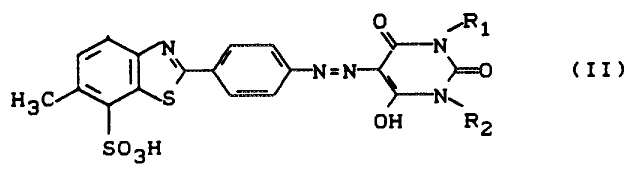 worin
R₁ und R₂ unabhängig voneinander für Alkyl, Cycloalkyl oder Aryl stehen,
und/oder tautomere Formen der Farbstoffe der Formeln (I) und/oder (II).

2. Farbstoffmischungen des Anspruchs 1, worin in Formel (II) R₁ und R₂ unabhängig voneinander für C₁-C₆-Alkyl, C₃-C₆-Cycloalkyl oder C₆-C₁₀-Aryl stehen.

3. Farbstoffmischungen des Anspruchs 1, worin in Formel (II) R₁ und R₂ unabhängig voneinander für C₁-C₄-Alkyl stehen.

4. Farbstoffmischungen des Anspruchs 1 enthaltend 5 bis 25 Gew.-Tle Farbstoff der Formel (I) und 0,2 bis 5 Gew.-Tle Farbstoff der Formel (IIa) 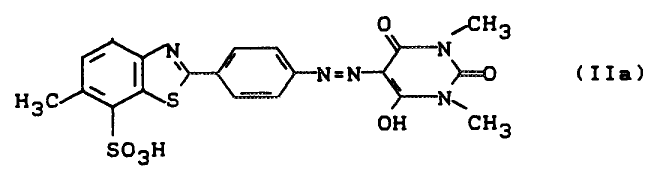 und/oder deren tautomere Formen.

5. Konzentrierte Farbstofflösungen enthaltend eine Farbstoffmischung gemäß Ansprüchen 1 bis 4.

6. Konzentrierte Farbstofflösungen des Anspruchs 5 enthaltend 2 bis 30 Gew.-Tle Farbstoffmischung und 98 bis 50 Gew.-Tle Wasser.

7. Konzentrierte Farbstofflösungen der Ansprüche 5 und 6 enthaltend 5 bis 25 Gew.-Tle Farbstoff der Formel (I) und/oder dessen tautomere Formen und 0,2 bis 5 Gew.-Tle Farbstoff der Formel (II) und/oder dessen tautomere Formen und 94,8 bis 70 Gew.-Tle Wasser.

8. Konzentrierte Farbstofflösungen der Ansprüche 5 bis 7 enthaltend 1 bis 10 Gew.-Tle Triethanolamin.

9. Konzentrierte Farbstofflösungen der Ansprüche 5 bis 8 enthaltend
7 - 25 Gew.-Tle Farbstoff der Formel (I), und/oder dessen tautomere Formen,
0,2 - 2 Gew.-Tle Farbstoff der Formel (IIa), und/oder dessen tautomere Formen,
1 - 5 Gew.-Tle Triethanolamin,
0,1 -0,5 Gew.-Tle Diethanolamin und
0,1 -0,5 Gew.-Tle Lithiumhydroxid und
91,6 - 67 Gew.-Tle Wasser.

10. Verfahren zum Färben und Bedrucken von Papier, dadurch gekennzeichnet, daß Farbstofflösungen gemäß Ansprüchen 5 bis 9 verwendet werden.

## Claims

1. Dyestuff mixtures comprising the dyestuff of the formula (I) 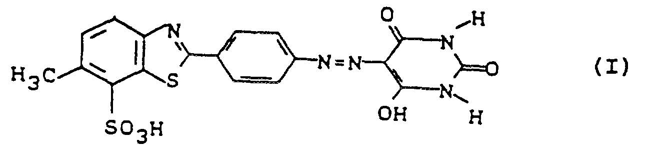 and a dyestuff of the formula 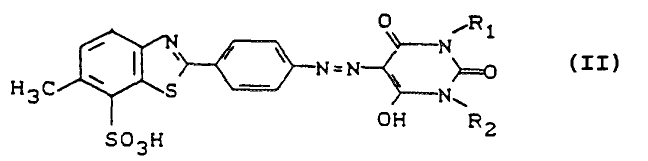 wherein
R₁ and R₂ independently of one another represent alkyl, cycloalkyl or aryl,
and/or tautomeric forms of the dyestuffs of the formulae (I) and/or (II).

2. Dyestuff mixtures of Claim 1, wherein, in formula (II), R₁ and R₂ independently of one another represent C₁-C₆-alkyl, C₃-C₆-cycloalkyl or C₆-C₁₀-aryl.

3. Dyestuff mixtures of Claim 1, wherein, in formula (II), R₁ and R₂ independently of one another represent C₁-C₄-alkyl.

4. Dyestuff mixtures of Claim 1, comprising 5 to 25 parts by weight of the dyestuff of the formula (I) and 0.2 to 5 parts by weight of the dyestuff of the formula (IIa) 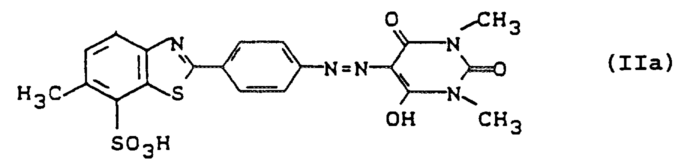 and/or tautomeric forms thereof.

5. Concentrated dyestuff solutions comprising a dyestuff mixture according to Claims 1 to 4.

6. Concentrated dyestuff solutions of Claim 5, comprising 2 to 30 parts by weight of dyestuff mixture and 98 to 50 parts by weight of water.

7. Concentrated dyestuff solutions of Claims 5 and 6, comprising 5 to 25 parts by weight of the dyestuff of the formula (I) and/or tautomeric forms thereof and 0.2 to 5 parts by weight of a dyestuff of the formula (II) and/or tautomeric forms thereof and 94.8 to 70 parts by weight of water.

8. Concentrated dyestuff solutions of Claims 5 to 7, comprising 1 to 10 parts by weight of triethanolamine.

9. Concentrated dyestuff solutions of Claims 5 to 8, comprising
7 - 25 parts by weight of the dyestuff of the formula (I) and/or tautomeric forms thereof,
0.2 - 2 parts by weight of the dyestuff of the formula (IIa) and/or tautomeric forms thereof,
1 - 5 parts by weight of triethanolamine,
0.1 - 0.5 part by weight of diethanolamine,
0.1 - 0.5 part by weight of lithium hydroxide and
91.6 - 67 parts by weight of water.

10. Process for dyeing and printing paper, characterised in that dyestuff solutions according to Claims 5 to 9 are used.

## Revendications

1. Mélanges de colorants contenant le colorant de formule (I) : 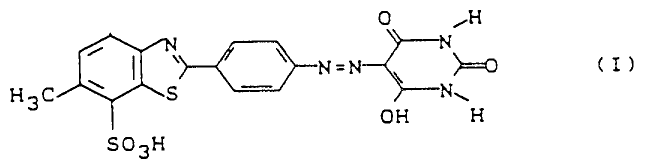 et un colorant de formule : 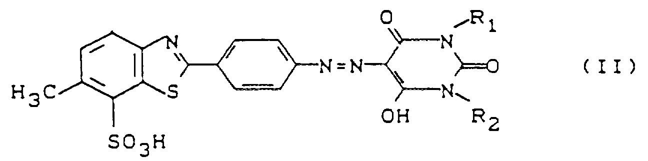 dans laquelle
R₁ et R₂ représentent chacun, indépendamment l'un de l'autre, un groupe alkyle, cycloalkyle ou aryle,
et/ou des formes tautomères des colorants de formules (I) et/ou (II).

2. Mélanges de colorants selon la revendication 1 pour lesquels, dans la formule (II), R₁ et R₂ représentent chacun, indépendamment l'un de l'autre, un groupe alkyle en C₁-C₆, cycloalkyle en C₃-C₆ ou aryle en C₆-C₁₀.

3. Mélanges de colorants selon la revendication 1 pour lesquels, dans la formule (II), R₁ et R₂ représentent chacun, indépendamment l'un de l'autre, un groupe alkyle en C₁-C₄.

4. Mélanges de colorants selon la revendication 1 contenant 5 à 25 parties en poids du colorant de formule (I) et 0,2 à 5 parties en poids du colorant de formule (IIa) : 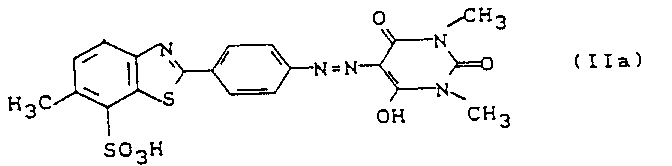 et/ou de leurs formes tautomères.

5. Solutions concentrées de colorants contenant un mélange de colorants selon les revendications 1 à 4.

6. Solutions concentrées de colorants de la revendication 5, contenant 2 à 30 parties en poids du mélange de colorants et 98 à 50 parties en poids d'eau.

7. Solutions concentrées de colorants des revendications 5 et 6, contenant 5 à 25 parties en poids du colorant de formule (I) et/ou de ses formes tautomères et 0,2 à 5 parties en poids du colorant de formule (II) et/ou de ses formes tautomères et 94,8 à 70 parties en poids d'eau.

8. Solutions concentrées de colorants des revendications 5 à 7, contenant 1 à 10 parties en poids de triéthanolamine.

9. Solutions concentrées de colorants des revendications 5 à 8, contenant
7 à 25 parties en poids du colorant de formule (I) et/ou de ses formes tautomères,
0,2 à 2 parties en poids du colorant de formule (IIa) et/ou de ses formes tautomères,
1 à 5 parties en poids de triéthanolamine,
0,1 à 0,5 partie en poids de diéthanolamine,
0,1 à 0,5 partie en poids d'hydroxyde de lithium et
91,6 à 67 parties en poids d'eau.

10. Procédé pour la coloration et l'impression du papier, caractérisé en ce que l'on utilise à cet effet des solutions de colorants selon les revendications 5 à 9.
